# EUROPÄISCHE PATENTANMELDUNG

(11) **EP 2 533 540 A1**
(43) Veröffentlichungstag der Anmeldung: **12.12.2012**
(21) Anmeldenummer: 11169657.1
(22) Anmeldetag: 11.06.2011
(51) Int. Cl.: H04N 13/00, G02B 27/26, G02B 27/22, G02B 7/00

(54) **Objektiv für einen Projektor oder eine Kamera mit einer Filteranordnung zur Bild-Datenselektion**

(71) Anmelder: Infitec GmbH, 89081 Ulm (DE)
(72) Erfinder: Prager, Marc Georg, 89183 Holzkirch (DE); Hellmuth, Thomas, 73431 Aalen (DE); Simon, Arnold, 89231 Neu-Ulm (DE); Schwarz, Sergej, 89129 Langenau (DE)
(74) Vertreter: Straub, Bernd

(57) **Zusammenfassung**

Die Erfindung betrifft ein Objektiv für einen Projektor oder eine Kamera mit einer Filteranordnung zur Bild-Datenselektion. Die Filteranordnung ist im Objektiv integriert ausgebildet und weist zwei oder mehr Filterräder auf, die jeweils in den Strahlengang des Objektives sich wechselseitig überlappend hineinkragen.

## Beschreibung

Die Erfindung betrifft **Objektiv für einen Projektor oder eine Kamera mit einer Filteranordnung zur Bild-Datenselektion insbesondere 3D-Datenselektion** sowie ein Stereoprojektionssystem.

Es existieren verschiedene Techniken zur dreidimensionalen Wiedergabe. Schon lange bekannt ist die Anaglyphentechnik. Durch einfache Rot/Grün-Überlagerung der beiden Links/Rechts-Teilbilder und Betrachtung des Summenbildes durch Filterbrillen, die für das jeweilige Auge nur den entsprechenden Farbanteil durchlassen, entsteht für den Betrachter ein stereoskopischer Eindruck. Nachteilig ist dabei die systembedingte Farbausfilterung, so dass mit dieser Technik keine realistischen Farbbilder wiedergegeben werden können.

Ein anderes Verfahren, welches im Fernsehen gelegentlich zum Einsatz kommt, ist das Pulfrich-Verfahren. Auch hier werden zur Betrachtung Brillen verwendet, wobei jedoch der Strahlengang für ein Auge stärker abgedunkelt wird als für das andere. Hierzu werden häufig ebenfalls Farbbrillen verwendet (aus Kostengründen), obwohl es nur auf die unterschiedliche Abdunkelung ankommt. Durch die unterschiedliche Helligkeit gelangt die Sehinformation leicht verzögert zu den verarbeitenden Bereichen des Gehirns. Bewegt sich eine dargestellte Szene im rechten Winkel zum Betrachter, so kommt es durch die zeitliche Verzögerung der Wahrnehmung für ein Auge zur Parallaxe und die Szene wird räumlich wahrgenommen. Der Vorteil dieser Technik besteht in der Einfachheit der Wiedergabetechnik. Nachteilig ist, dass sich die Szene ständig in Bewegung befinden muss, was oft nach einiger Zeit als unangenehm empfunden wird. Zudem muss sich die Szene immer in die gleiche Richtung bewegen, da sich sonst die Tiefeninformation umkehren würde. Auch muss die Bewegungsgeschwindigkeit konstant gehalten werden, da sonst die Tiefeninformation nicht richtig wiedergegeben wird.

Im Computerbereich wird häufig ein anderes Verfahren verwendet: Die Rechts/Links-Anteile werden dabei durch sogenannte Shutterbrillen separiert, die durch elektrisch schaltbare Polarisationsfilter das Licht, z.B. von einem Monitor oder Projektor, abwechselnd nur für das rechte oder linke Auge des Betrachters durchlassen. Die Shutterbrille ist dabei mit dem Wiedergabegerät (z.B. Monitor) synchronisiert, so dass von der dort dargestellten Wechselfolge von Links-/Rechts-Teilbildern entsprechend nur die jeweiligen Teilbilder das linke bzw. rechte Auge erreichen. Diese Technik bietet zwar eine farbgetreue Wiedergabe, hat dafür aber den Nachteil, dass die Helligkeit stark reduziert wird, da (abwechselnd) die Bildwiedergabe nur von einem Auge des Betrachters wahrgenommen wird (also nur die Hälfte der Gesamthelligkeit des Monitors) und zusätzlich die Polarisationsfilter bereits für sich (auch in der Durchlassphase) Licht absorbieren. Zudem erfordert die ständige Links/Rechts-Ausblendung eine sehr hohe Bildwiederholfrequenz (mindestens 120-160 Hz) damit ein störender Flacker-Effekt unterdrückt wird.

Ein anderes Prinzip basiert auf der Interferenzfiltertechnik. Ein Verfahren zur Erzeugung einer optisch dreidimensional wahrnehmbaren Bildwiedergabe nach der Interferenzfiltertechnik bzw. ein entsprechendes Stereoprojektionssystem ist aus der DE 199 24 167 A1 beziehungsweise aus der DE 102 49 815 A1 bekannt. Dabei werden zur Projektion zwei Interferenzfilter mit leicht unterschiedlicher spektraler Filterwirkung eingesetzt. Jedes Filter weist drei schmale Durchlassbereiche (transmittierende Intervalle) für die Grundfarben Blau, Grün und Rot auf. Die Breite der Durchlassbereiche ist dabei im Bereich von 20 nm gewählt. Die Durchlassbereiche der beiden Filter sind dabei gegeneinander verschoben so angeordnet, dass sie keinen Überlapp zeigen und damit orthogonal zueinander ausgebildet sind. Mit Hilfe der beiden zueinander orthogonalen Interferenzfilter, die jeweils drei Durchlassbereiche für die drei Primärvalenzen im Bereich der blauen, grünen und roten Farbwahrnehmung zeigen, lassen sich zwei voneinander getrennte Perspektivteilbilder auch Halbbilder genannt, eins für das linke Auge und eins für das rechte Auge realisieren, mit deren Hilfe ein dreidimensional wahrnehmbares Bild auf einen Schirm projiziert werden kann. Dieses Bild wird von einem Betrachter selektiv durch die verschiedenen Augen wahrgenommen, indem er eine Brille nutzt, deren linkes Brillenglas eine Filtercharakteristik entsprechend dem einen Interferenzfilter und das rechte Brillenglas eine Filtercharakteristik entsprechend dem anderen Interferenzfilter zeigt. Dadurch lassen sich die beiden Perspektivteilbilder auf dem Schirm sicher augenspezifisch voneinander trennen und die Stereowirkung bzw. die dreidimensionale Wirkung der Bilder beim Betrachter erzeugen.

Aus der DE 199 24 167 A1 ist weiterhin ein Verfahren zur Aufzeichnung und Wiedergabe von Farbbildern mit gesteigerter Wiedergabetreue unter Verwendung eines erweiterten Farbraumes bekannt. Dabei werden bei der Bildwiedergabe unter Verwendung von Interferenzfiltern in Form von dichroitischen Spiegeln sechs Primärvalenzen erzeugt, die jeweils Bildinformationen des kürzer- und des längerwelligen Teils jedes einzelnen Grundfarbenspektralbereichs beinhalten. Durch die sechs Primärvalenzen entsteht ein erweiterter Farbraum, der die Gestalt eines Farbsechsecks entsprechend der DIN 6164, die Farbdreiecke zeigt, aufweist und der zu einer verbesserten Farbwiedergabe führt. Hierbei werden stets zwei Objektive für die Aufnahme beziehungsweise für die Wiedergabe der 6 schmalbandigen Primärvalenzen verwendet.

Der allgemeine Aufbau eines Kameraobjektives bzw. eines Projektionsobjektives ist seit über hundert Jahren bekannt. Der Aufbau einer Projektionsoptik für einen Projektor zur 3D-Projektion ist aus dem Deutschen Gebrauchsmuster DE 20 2008 010 840 U1 bekannt. Hierin wird beschrieben, dass die 3D-Projektion und damit die 3D-Datenselektion mittels der Farbinterferenzmethode erfolgt, indem auf einem einzigen gemeinsamen Trägermedium die Farbinterferenzfilter für die verschiedenen 3D-Datenkanäle angeordnet sind und diese abwechselnd in den Strahlengang bewegt werden. Der gemeinsame Träger und die Farbinterferenzfilterteile bilden ein Farbinterferenzfilterrad, eine Art Filterrad bzw. Farbrad. Diese Ausbildung des Projektionsobjektives erweist sich als anfällig.

Der Erfindung liegt daher die Aufgabe zugrunde, ein Objektiv für einen Projektor oder eine Kamera mit einer Filteranordnung zur Datenselektion anzugeben, das wenig anfällig ist und zusätzlich eine gute insbesondere 3D-Datenselektion gewährleistet.

Diese Aufgabe wird gelöst durch ein Objektiv mit den Merkmalen nach Anspruch 1 und ein Stereoprojektionssystem mit den Merkmalen des Anspruchs 20.

Vorteilhafte Weiterbildungen der Erfindung sind Gegenstand der Unteransprüche.

Das erfindungsgemäße Objektiv für einen Projektor oder eine Kamera mit einer Filteranordnung zur Bild-Datenselektion insbesondere zur 3D-Datenselektion zeigt zwei oder mehr Filterräder, die jeweils mit Filtern zur Bild-Datenselektion insbesondere zur 3D-Datenselektion versehen sind. Diese sind jedes für sich so in das Objektiv integriert, dass sie in den Strahlengang des Objektives hineinkragen. Dies erfolgt so, dass sie einen gemeinsamen Überlapp im Strahlengang des Objektives haben, so dass das die Bildinformation enthaltende Licht zumindest partiell nicht nur durch ein, sondern durch alle Filterräder hindurchtreten muss und dadurch zu jedem Zeitpunkt die Filtereigenschaften von allen beteiligten Filterrädern aktiv einwirken.

Durch die Erfindung ist es auch möglich, die Filterräder in ihrem Durchmesser kleiner als im Stand der Technik auszubilden, und dadurch die einzelnen bewegten Massen zu reduzieren, was regelmäßig aufgrund der besseren Rotationseigenschaften vorzugsweise mit einer verbesserten Bild-Datenselektion insbesondere 3D-Datenselektion verbunden ist. Durch die Reduktion der Durchmesser und Massen wird auch erreicht, dass die Objektive leichter und weniger anfällig sind, da bewegte Teile insbesondere mit zunehmender Masse immer störungsanfälliger werden. Das erfindungsgemäße Objektiv zeichnet sich somit durch seine geringe Anfälligkeit bei guter BildDatenselektion aus. Durch diese Ausbildung der Filteranordnung mit zwei oder mehreren Filterrädern gelingt es, durch die integrierte Anordnung eine sehr verlässliche Bilddatenselektion zu erreichen, was im Fall der 3D-Datenselektion zu einem besonderes angenehmen 3D-Erlebnis gerade für einen Kinobesucher führt, beziehungsweise im Fall einer Bilddatenselektion zur Erreichung einer gesteigerten Wiedergabetreue unter Verwendung eines erweiterten Farbraumes lässt sich durch die gleichzeitige Verwendung der beiden Filterräder mit insgesamt wenigstens 6 oder 7 schmalbandigen Durchlassbereichen im sichtbaren Frequenzbereich des Lichtes ein besonders Wiedergabeergebnis von besonderer Farbqualität erreichen. Das entsprechende Objektiv erweist sich dabei als wenig anfällig und vorteilhaft gewichtsarm. Darüber hinaus gelingt es, durch geeignete Ausbildung und Anordnung der Filterräder den möglichen räumlichen Durchlassbereich der Filterräder im Strahlenbündel des Objektives größer als nur mit einem einzigen in das Objektiv integrierten Filterrad zu realisieren. Dies führt zu einer verbesserten Lichtausbeute des Objektives mit einer Filteranordnung Bild-Datenselektion insbesondere zur 3D-Datenselektion.

Nach einer bevorzugten Ausbildung der Erfindung ist je Filterrad ein Motor insbesondere ein Elektromotor dem Antrieb des Filterrades zugeordnet. Dieser Motor wird bevorzugt direkt auf der Achse des Filterrades angeordnet und treibt damit das Filterrad direkt ohne Verwendung von zusätzlichen Bauteilen, die zusätzliche bewegliche Teile darstellen, an. Dadurch ist eine sehr wenig anfällige Struktur für ein erfindungsgemäßes Objektiv geschaffen. Als Elektromotoren haben sich insbesondere Schrittmotoren bewährt, die sich durch ihre spezielle Ansteuerung besonders gut aufeinander synchronisieren lassen, was für den Betrieb der erfindungsgemäßen Filteranordnung besonders wichtig ist.

Darüber hinaus hat es sich auch bewährt, einen einzigen zentralen Motor insbesondere einen Elektromotor zum Antrieb der mehreren, diesem Motor zugeordneten Filterräder vorzusehen. Hierdurch ist gewährleistet, dass ein einziger Motor ausreicht, mehrere Filterräder gemeinsam anzutreiben. Der Antrieb erfolgt über mehrere Antriebselemente, die die Antriebsbewegung des Motors auf die mehreren zugeordneten Filterräder gemeinsam verteilt und somit eine Filteranordnung realisiert, die mit einem einzigen Antriebsmotor auskommt und somit sehr gewichtsreduziert ausgebildet ist. Vorzugsweise ist dem Motor ein Getriebe zugeordnet, das die Rotation des Motors, der insbesondere als Schrittmotor ausgebildet ist, in den geeigneten Rotationsfrequenzbereich der Filterräder transferiert und dabei eine verlässliche und sichere Rotation ermöglicht. Durch das Vorsehen eines einzigen Antriebsmotor, eines Getriebes gemeinsam mit den Filterrädern lässt sich auch eine ausgeglichene Gewichtsverteilung in dem Objektiv erreichen, so dass die mechanische Belastung des Systems bei Rotation der Filterräder gering gehalten werden kann. Vorzugsweise zeigt das erfindungsgemäße Objektiv eine Synchronisationsstufe zum Synchronisieren der Filterräder. Diese ist insbesondere als gemeinsames Getriebe zwischen den Filterrädern und einem oder den mehreren Motoren ausgebildet. Durch diese mechanische Kopplung der beteiligten Filterräder zusammen mit dem Antrieb, bestehend aus einem oder mehreren Motoren, ist sichergestellt, dass die Rotation der Filterräder gemeinsam miteinander gekoppelt verläuft. Dabei ist die Synchronisationsstufe so ausgebildet, dass die Rotationsfrequenz der Filterräder mit den darauf angeordneten Filtersegmenten aufeinander abgestimmt synchron verlaufen. Dabei kann die Rotationsfrequenz identisch oder auch ein Mehrfaches von der anderen Rotationsfrequenz sein. Durch diese mechanische Kopplung ist ein sehr stabiles System zur Synchronisierung der Filtereigenschaften zwischen den beiden oder den mehreren beteiligten Filterrädern gewährleistet und damit eine sehr gute 3D-Datenselektion insbesondere Bild-Datenselektion gegeben.

Nach einer bevorzugten Ausbildung der Erfindung ist die Synchronisationsstufe so ausgebildet, dass sie einen Ring aufweist, der im Bereich der Innenwand des Gehäuses des Objektives den Strahlengang des Objektives umschließend angeordnet ist und über eine Innenverzahnung verfügt. In diese Innenverzahnung greifen Zahnräder ein, die mit den Filterrädern verbunden sind und die Rotation des Rings in eine Rotation der Zahnräder und damit in eine Rotation der Filterräder umsetzt. Der Antrieb des Rings erfolgt bevorzugt über einen im Randbereich des Innenraums des Objektives angeordneten Elektromotor, der den Ring über die Innenverzahnung antreibt. Durch diese dezentrale Anordnung des wenigstens einen Antriebsmotors und des Ringes gelingt es, das Objektiv in seinen optischen Eigenschaften wenig zu beeinflussen und dadurch ein sehr hochwertiges optisch wirksames Objektiv zu schaffen, das sich durch eine herausragende 3D-Datenselektion auszeichnet. Durch diese bevorzugte Ausbildung des Objektives ist eine Anordnung geschaffen, in der Filterräder zentral im Bereich des Ringes angeordnet sind und dadurch eine Einheit geschaffen ist, die als modulare Einheit ausgebildet sein kann und dadurch eine einfache und verlässliche Integration in das Objektiv ermöglicht. Mithin ist die Möglichkeit geschaffen, ein 3D-Objektiv für einen Projektor und eine Kamera zu schaffen, das quasi baugleich modular gegebenenfalls auch ohne 3D-Funktionalität realisiert werden kann, indem das Modul für die 3D-Datenselektion, das die erfindungsgemäße Filteranordnung enthält, nicht in das Objektiv integriert wird.

Nach einer bevorzugten Ausbildung der Erfindung ist das Objektiv mit einer elektronischen Steuereinheit versehen. Die elektronische Steuereinheit sorgt dafür, dass die Filterräder hinsichtlich der Rotationsfrequenz, der Phasenlage und der Synchronisation in Verbindung mit dem oder den Motoren so gesteuert werden, dass die Bilddaten, die die 3D-Daten für die stereoskopische Bildwiedergabe darstellen, so in Abstimmung mit den Filterrädern gehandhabt werden, dass jeweils die richtigen Bilddaten abhängig von der 3D-Datenselektion durch die Filterung durch die Filterräder für die 3D-Datenselektion zur Darstellung oder zur Aufnahme gebracht werden.

Damit ist sichergestellt, dass durch das Objektiv selbst eine korrekte stereokanalselektive bzw. 3D-datenselektive Wiedergabe der 3D-Daten bzw. eine Aufnahme der 3D-Daten mit korrektem, angepasstem Timing so erfolgt, dass die Stereowirkung verlässlich gewährleistet ist. In entsprechender Weise gilt dies bei einer Ausbildung des Objektives zur verbesserten Farbwiedergabe und der damit verbundenen Bild-Datenselektion. Die Ausbildung eines erfindungsgemäßen Objektives mit dieser Art von Steuereinheit schafft ein sehr universell strukturiertes Objektiv, das sehr einfach die Möglichkeit bietet, einen Projektor oder eine Kamera durch Verwendung des Objektives an die äußeren Gegebenheiten sei der Aufnahmesituation oder der Projektionssituation z.B. durch höheren Wechselfrequenzen anzupassen. Um dies verlässlich zu realisieren, werden die notwendigen Informationen z.B. Timing-Informationen dem Objektiv vorzugsweise über elektrische Kontakte zur Verfügung gestellt werden, so dass die Steuereinheit die erfindungsgemäß sichere Steuerung der Filterräder hinsichtlich Rotationsfrequenz, Phasenlage und/oder Synchronisation gewährleistet.

Nach einer weiteren bevorzugten Ausführung der Erfindung sind an der Außenseite des Objektives insbesondere im Bereich der mechanischen Verbindung zu einem Projektor oder einer Kamera mehrere elektrische Kontakte vorgesehen. Über diese elektrischen Kontakte wird das Objektiv mit seinen Komponenten insbesondere die Elektromotoren oder die Steuereinheit bzw. die Synchronisationsstufe mit elektrischer Energie versorgt. Darüber hinaus ist es auch möglich, alternativ oder zusätzlich Steuerdaten, insbesondere für die Steuereinheit, dem Objektiv über diese elektrischen Kontakte zuzuführen. Durch die bevorzugte Anordnung der elektrischen Kontakte im Verbindungsbereich ist es möglich, diese Kontakte im verbundenen Zustand vor äußeren Beeinträchtigungen insbesondere vor Fehlkontaktierung zu schützen, indem diese Kontakte durch den Verbindungsvorgang bedeckt und dadurch vor äußeren Zugänglichkeiten geschützt sind. Elektrische Gegenkontakte im Verbindungsbereich an dem Projektor bzw. der Kamera sind geeignet, diese elektrische Kontaktierung zu den Kontakten im Verbindungsbereich im verbundenen Zustand zu ermöglichen. Dadurch sind eine sehr sichere und verlässliche Handhabung und ein entsprechend verlässlicher Betrieb des Objektives gewährleistet.

Es hat sich darüber hinaus bewährt, über diese Kontakte nicht nur Motoren zum Antrieb der Filterräder mit Energie zu versorgen sondern darüber hinaus ein oder mehrere weitere Motoren insbesondere zum Antrieb für eine Zoom-, Blenden-und/oder Scharfstellungseinheit zu versorgen und vorzugsweise ergänzend hierfür auch die entsprechenden elektrischen Steuersignale zu übertragen. Entsprechend ist das erfindungsgemäße Objektiv auch mit weiteren motorischen Antrieben versehen. Vorzugsweise sind diese in dem erfindungsgemäßen Objektiv vorhandenen elektrischen Komponenten, sei es elektrische Motoren, die Steuereinheit oder die Synchronisationseinheit, jeweils über eine gemeinsame Energieversorgung und damit über gemeinsame Kontakte zur Energieversorgung mit elektrischer Energie versorgt. Dies schafft eine Reduktion der Kontakte sowie der elektrischen Leitungen und sorgt dafür, dass das erfindungsgemäße Objektiv zum einen weniger störungsanfällig und zum anderen auch mit einem geringeren Gewicht realisiert sein kann.

Es hat sich besonders bewährt, wenigstens ein Filterrad des erfindungsgemäßen Objektives mit mehreren Farbfiltersegmenten zu versehen, die als Farbfilter mit einem oder mehreren schmalbandigen Durchlassbereichen mit einer Halbwertsbreite von unter 30 nm insbesondere im Bereich von 20 nm ausgebildet sind. Diese Farbfilter sind bevorzugt als Farbinterferenzfilter ausgebildet, die über besonders ausgeprägte steile Flanken der Durchlassbereiche verfügen. Erfindungsgemäß ist es möglich, die verschiedenen Durchlassbereiche so in den verschiedenen Farbbereichen des sichtbaren Spektrums anzuordnen, dass sie sich wechselseitig nicht oder nur in unbedeutend geringem Maße überlappen. Durch diese Art der Farbfiltersegmente ist ein besonders sicheres und angenehmes Farbverhalten, sowie Kontrastverhalten und auch 3D-Datenselektionsverhalten ermöglicht.

Dabei werden die Durchlassbereiche bevorzugt so ausgebildet, dass die Farbfiltersegmente des Filterrades insgesamt wenigstens zwei Durchlassbereiche im roten, wenigstens zwei im grünen und wenigstens zwei Durchlassbereiche im blauen Farbbereich des sichtbaren Lichtes aufweisen, wobei jeweils wenigstens ein Durchlassbereich in jedem Farbkanal für das linke Auge, also für den linken 3D-Datenkanal, und der andere für das rechte Auge bzw. für den rechten 3D-Datenkanal verwendet wird.

Die Synchronisierung und die Steuerung der Filterräder erfolgt dabei jeweils so, dass die jeweils geeigneten Farbfiltersegmente durchstrahlt werden, wenn die entsprechenden 3D-Dateninhalte durch die erfindungsgemäße Kamera aufgenommen bzw. durch den Projektor projiziert werden.

Alternativ zu den Interferenzfiltern haben sich auch Folienfilter bewährt, die über sehr schmalbandige Farbstoffe verfügen und entsprechend schmale Durchgangsbereiche aufweisen.

Darüber hinaus hat es sich ebenso bewährt, die mehreren Filtersegmente wenigstens eines Filterrades so auszubilden, dass sie unterschiedliche Polarisationseigenschaften aufweisen. Dabei hat es sich besonders bewährt, einzelne Filtersegmente rechtsdrehend polarisierend und die korrespondierenden anderen Filtersegmente linksdrehend polarisierend zu realisieren. Diese beiden unterschiedlichen Polarisationsfilter werden dazu verwendet, die beiden unterschiedlichen Kanäle für die Stereoprojektion und damit für die 3D-Datenselektion zu realisieren. Alternativ hierzu hat es sich auch bewährt, linear polarisierende Filter zu verwenden, die unterschiedliche zueinander orthogonale Linearpolarisierungen für die 3D-Datenselektion zeigen. Diese haben sich aber nur für einfache, wenig anspruchsvolle und kostengünstige Anwendungen als geeignet erwiesen.

Nach einer bevorzugten Realisierung der Erfindung werden Filterräder verwendet, von denen wenigstens eines mit Farbfiltersegmenten versehen ist, die über die oben genannten schmalbandigen Durchlassbereiche verfügen. Mit Hilfe dieses so ausgebildeten Farbfilterrades ist es möglich, mit einem Farbrad durch die Rotation des Farbrades in Verbindung mit der zeitlich passenden Aufnahme bzw. Wiedergabe der 3D-Bilddaten ein Stereobild zu realisieren. Parallel dazu ist wenigstens eines der anderen Filterräder mit einer Filterstruktur versehen, die in entsprechender Weise mit Hilfe von selektiven Polarisationsfiltern in den entsprechenden Filtersegmenten eine eigenständige 3D-Datenselektion entweder zur Aufnahme und/oder zur Wiedergabe ermöglichen. Durch die gemeinsame Realisierung des erfindungsgemäßen Objektives mit Filterrädern nach beiden 3D-Datenselektionsmethoden und der aufeinander abgestimmten Rotation ist es möglich, eine äußerst sichere, selektive und verlässliche Trennung der unterschiedlichen 3D-Datenkanäle zu gewährleisten. Das beschriebene Objektiv verbindet dabei verschiedene Vorteile der beiden Selektionssysteme.

Als besonders vorteilhaft hat es sich erwiesen, zwischen den einzelnen Filtersegmenten mit Filtern zur 3D-Datenselektion jeweils einen Bereich vorzusehen, der als Blockfilter ausgebildet ist, der vollständig oder weitgehend vollständig das sichtbare Licht abblockt. Durch dieses Vorsehen eines im sichtbaren Bereich breitbandigen Blockfilters zwischen den Filtersegmenten, entweder den Polarisationsfiltersegmenten oder den Farbfiltersegmenten, ist gewährleistet, dass eine besonders sichere Synchronisation der 3D-Bilddaten mit den Filterrädern insbesondere hinsichtlich der Phasenlage und der Rotationsfrequenz ermöglicht ist. Durch diese erfindungsgemäße Realisierung ist eine gewisse Abweichung von der Vorzugsphasenlage bzw. von der Vorzugsfrequenz nicht unmittelbar mit einem massiven Qualitätsverlust verbunden. Auf besonders aufwändige Regelungsprozesse zur Einstellung der richtigen Phasenlage oder der Rotationsfrequenz kann erfindungsgemäß verzichtet werden. Durch diese Ausbildung wird es auch möglich langsamer schaltende Projektoren wie LCD-Projektoren für die 3D-Projektion zu verwenden und dabei die 3D-Stereoqualität durch eine deutliche Verringerung des Stereokanalübersprechens zu verbessern.

Als bevorzugte Ausbildung der Erfindung hat es sich erwiesen, wenigstens zwei Filterräder insbesondere paarweise in ihrer Struktur d.h. in ihrem Aufbau und in ihrer Filtereigenschaft entsprechend auszubilden. Durch diese Realisierung ist es möglich, eine einfache und sichere Herstellung des Systems zu ermöglichen und dabei die Vorteile der Verwendung von wenigstens zwei Filterrädern insbesondere im Hinblick auf deren besonders ausgeprägtes sicheres Trennen der 3D-Daten beizubehalten. Auch im Hinblick auf das reduzierte Gewicht der zwei erfindungsgemäß kleiner ausbildbaren Filterräder und im Hinblick auf deren mechanischen Stabilität hinsichtlich der Rotationskräfte und des Antriebes erweist sich diese Lösung als vorteilhaft.

Nach einer besonders bevorzugten Ausbildung der Erfindung sind die wenigstens zwei Filterräder so ausgebildet und so in dem Objektiv angeordnet, dass sie sich wechselseitig im Strahlengang in einem Überlappungsbereich überlappen. Der Überlappungsbereich ist dabei so ausgebildet, dass er etwa ein Sechstel des Umfangs der beiden Filterräder umfasst. Bevorzugt sind dabei die Filterräder etwa gleich groß gewählt. Dies bedeutet, dass der Öffnungswinkel des Überlappungsbereichs der Filterräder für ein Farbrad in etwa 60° beträgt. Diese Ausbildung und Anordnung der Filterräder ermöglicht einen sehr effizienten, kompakten und gewichtsarmen Aufbau der Filterräder, ohne dass die Qualität der 3D-Datenselektion wesentlich beeinträchtigt ist. Die erfindungsgemäßen Filterräder zeigen dabei einen Durchmesser, der etwa im Bereich des halben Innendurchmessers des Einbauortes der Filteranordnung im Objektiv entspricht.

Es hat sich besonders bewährt, in dem Objektiv im Bereich der Filterräder insbesondere in Strahlrichtung vor den Filterrädern eine Blende anzuordnen, die die Kontur des Strahlenbündels begrenzt. Dabei ist die Blende erfindungsgemäß mit einer Öffnung in Form eines Hexagons ausgebildet, welches zweifach achsspiegelsymmetrisch ausgebildet ist. Die beiden Symmetrieachsen sind dabei im Wesentlichen senkrecht zueinander angeordnet. Die Seitenlinien des Hexagons sind dabei nicht notwendigerweise gerade ausgebildet. Vielmehr zeigen zwei Seiten bevorzugterweise die Gestalt eines Kreisabschnittes, während die anderen Seiten gerade ausgebildet sind und jeweils zwei Seiten bevorzugt in einem Winkel von etwa 60° zueinander stehen. Durch diese Anordnung aus Blende mit benachbarten Filterrädern gelingt es, eine sehr effiziente Durchleuchtung der Filterräder zu erreichen, was zu einer hohen Lichtausbeute des Objektives mit Bilddatenselektion führt. Erfindungsgemäß ist durch diese Anordnung ein Durchstrahlen der Filterräder im Überlappungsbereich durch mehrere Filterräder und im Nichtüberlappungsbereich jeweils nur eines Filterrades gegeben. Sind die Filterräder beispielsweise so ausgebildet und angeordnet, dass zeitgleich jeweils entsprechende Filtersegmente im durch die Blende begrenzten Strahlenbündel zum Liegen kommen, so wird die volle Öffnung der Blende einer definierten Bilddatenselektion unterworfen. Drehen sich die Filterräder um eine halbe Umdrehung weiter, so befindet sich im Strahlengang das alternative Filtersegment, das in seinen Filtereigenschaften zu dem anderen Filtersegment alternativ, d.h. orthogonal dazu ausgebildet ist. Dieses Objektiv zeichnet sich somit durch eine ausgeprägte Lichtausbeute bei vorhandener Bilddatenselektion aus.

Es hat sich besonders bewährt, die Filtersegmente eines Farbrades oder Filterrades nur im äußeren Randbereich und damit ringförmig mit einer Breite kleiner als der halbe Radius des Filterrades insbesondere kleiner als ein Viertel des Radius des Filterrades auszubilden und anzuordnen. Hierdurch gelingt es, die aufwändigen und komplexen Strukturen des Filterrades, nämlich die Filtersegmente, welche typischerweise eine hohe Dichte aufweisen und darüber hinaus aufgrund der optischen Eigenschaften sehr kostenintensiv sind, in ihrer Fläche bzw. in ihrem Volumen und damit in ihrem Gewicht erheblich einzuschränken und zusätzlich das Trägermaterial des Filterrades relativ frei nach Stabilitäts- und Gewichtskriterien zu optimieren. Dies ermöglicht, das Gewicht des Filterrades merklich zu reduzieren und damit auch die notwendigen Antriebskräfte für das Filterrad bzw. die Filterräder zu begrenzen und dadurch die Antriebsmotoren für die Filterräder erfindungsgemäß kleiner zu dimensionieren und dadurch den Bauraum zu begrenzen und dadurch das erfindungsgemäße Objektiv in seinen Gesamteigenschaften insbesondere im Hinblick auf Gewicht und hinsichtlich deren optischen Eigenschaften zu verbessern. Eine bevorzugte Ausbildung des Objektives zeigt zusätzlich zu den Filtersegmenten zur schmalbandigen Farbfilterung und/oder zur Polarisationsfilterung eines Filterrades wenigstens ein weiteres Filtersegment mit einem den sichtbaren Lichtbereich umfassenden Durchlassbereich. Durch dieses Vorsehen des wenigstens einen zusätzlichen Filtersegments gelingt es, die Möglichkeit eines weiteren Betriebsmodus neben der Verwendung als Objektiv für die 3D-Datenselektion (Stereoanwendung) bzw. zur erweiterten Farbaufnahme bzw. -wiedergabe zu realisieren. Damit gelingt es, mit ein und demselben Objektiv bei zeitgleicher Anordnung der zusätzlichen Filtersegmente der Filterräder in den Strahlengang ein übliches 2D-Bild aufzunehmen bzw. wiederzugeben. Hierbei wird bevorzugt die Position der Filterräder statisch gehalten, so dass dieser Betriebsmodus für längere Zeit wirksam ist. In diesem Zustand kann auf die Verwendung von Brillen zur Selektion der projizierten Bilddaten in einen rechten und linken Kanal eines Stereobildes für den Betrachter verzichtet werden, was auch in entsprechender Weise für einen Betriebsmodus mit verbesserter Farbwiedergabe gilt.

Durch die Möglichkeit, mit ein und demselben Objektiv mehrere Betriebsmodi zu realisieren, ohne dass ein Umbau oder ein Austausch des Objektives notwendig wird, ist ein einfach zu handhabendes und breit einsetzbares Objektiv geschaffen.

Es hat sich als vorteilhaft erwiesen, die Rotationsrichtung der Filterräder neben der Möglichkeit, sie in eine gemeinsame einheitliche Richtung rotieren zu lassen, in Gegenrichtung zueinander rotieren zu lassen. Dies hat den besonderen Vorteil, dass sich durch die entgegengesetzte Rotationsrichtung strukturelle Unwuchten in den Filterrädern Schwingungen weniger zu Gesamtschwingungen aufschaukeln, die zu einer unerwünschten starken mechanischen Belastung des Gesamtsystems des Objektives führen und zur Beeinträchtigung der Qualität des erfindungsgemäßen Objektives insbesondere hinsichtlich seiner optischen Abbildungseigenschaften führen können.

Darüber hinaus gelingt es, durch diese Ausbildung den unerwünschten Effekt des wechselseitigen Anziehens der Filterräder bei hohen Drehraten aufgrund der Strömungsverhältnisse zwischen den eng benachbarten Filterrädern merklich zu reduzieren und dadurch die mechanische Belastung insbesondere das Reiben aneinander zu verhindern und dadurch die Lebenszeit der Filterräder zu erhöhen.

Vorzugsweise ist das erfindungsgemäße Objektiv so ausgebildet, dass die Filterräder im Bereich zwischen der ersten und zweiten Linsengruppe, betrachtet von dem Verbindungsbereich zum Projektor bzw. zum Kameragehäuse, in Richtung der Frontlinse des Objektives angeordnet sind. Durch diese Anordnung der Filterräder innerhalb des Objektives gelingt es, dass die Filterräder in einem Bereich des Objektives angeordnet sind, in dem der Strahlengang einen kleinen Durchmesser aufweist und in dem bevorzugt der Strahlwinkel einen Wert von vorzugsweise kleiner als 20 Grad, insbesondere kleiner als 15 Grad zeigt. Durch diese Anordnungen kann der Überlapp zwischen den Filterrädern im Strahlengang klein gewählt werden kann, was sich positiv auf die notwendige Größe der Filtersegmente bzw. auf die Größe der verwendeten Filterräder auswirkt. Hierdurch gelingt es, die Masse und Größe der Filterräder klein zu wählen, was sich positiv auf die Stabilität der Filterräder bzw. positiv auf die Größe bzw. Ausbildung der Antriebsmotoren auswirkt. Hierdurch gelingt es, insbesondere die Anordnung aus Filterrädern mit Antrieb und Steuereinheit bzw. Synchronisationseinheit besonders kompakt bzw. leicht auszubilden, was die Handhabbarkeit und Beständigkeit und damit die Qualität des erfindungsgemäßen Objektives verbessert. Vorzugsweise zeigt das Objektiv, das insbesondere für eine Verwendung mit einem Projektor vorgesehen ist, eine Teileinheit auf, die als teleskopische Optikeinheit ausgebildet ist. Erfindungsgemäß ist die teleskopische Optikeinheit zur Verkleinerung der Apertur unter Beibehaltung eines annähernd parallelen Strahlenbündels vorgesehen und die Filterräder möglichst im Bereich dieser kleinen Apertur angeordnet. Hierzu sind die Filterräder zwischen der ersten Linsengruppe und der teleskopischen Optikeinheit angeordnet. Durch diese Ausbildung des Objektives lässt sich das Strahlenbündel im Bereich zwischen der ersten Linsengruppe und der teleskopischen Optikeinheit sehr klein im Durchmesser ausbilden, wodurch es gelingt, die zeitgleich durchstrahlten Filtersegmentflächen klein zu halten. Dies hat mehrere Vorteile, zum einen können die Filtersegmente klein und damit kostengünstig ausgebildet sein, andererseits können die Filterräder noch kleiner und leichter ausgebildet sein und zum anderen lassen sich die Phasen, in denen unterschiedliche Filtersegmente sich zeitgleich im Strahlengang befinden, kurz gehalten werden, so dass unerwünschte, undefinierte Bilddatenselektionen wirkungsvoll beschränkt werden können, ohne dass dies erheblichen Einfluss auf die Übertragungseigenschaften des Objektives hat.

Eine weitere Ausbildung der Erfindung zeigt ein Stereoprojektionssystem zur Erzeugung einer optisch 3-dimensionalen wahrnehmbaren Bildwiedergabe mit einem Projektor mit einem Projektionsobjektiv, wie es vorstehend beschrieben ist. Mit Hilfe des erfindungsgemäßen Projektors wird ein 3D-Bild auf einen für die Projektion geeigneten Projektionsschirm projiziert, das mit Hilfe wenigstens einer Stereobrille in die beiden Stereobildkanäle getrennt wird. Dies erfolgt mit einer Stereobrille, deren Brillengläser in ihren transmittierenden Eigenschaften für das rechte und linke Auge eines Betrachters den optischen Eigenschaften der Filter zur 3D-Datenselektion im Objektiv entsprechen.

Mithin ist sichergestellt, dass das erfindungsgemäße Objektiv mit seinen besonderen Filtereigenschaften zur 3D-Datenselektion mit den Brillengläsern der Stereobrille so zusammenwirkt, dass das Bild für das linke Auge (Linker Kanal des Stereobildes) auch vom linken Auge des Betrachters aufgenommen wird, während der andere Kanal aufgrund der orthogonalen Filterstruktur geblockt wird und umgekehrt, so dass durch rechte Brillenglas der Stereobrille die Bilddaten des rechten Stereokanals transmittiert werden, während die anderen Bilddaten des linken Kanals geblockt werden. Damit ist sichergestellt, dass durch die Stereobrille des erfindungsgemäßen Projektionssystems eine verlässliche 3D-Datenselektion durch die Brille entsprechend den Filtern der Filterräder im Objektiv realisiert wird und dadurch der gewünschte Stereoeffekt verlässlich und sicher erreicht wird.

Die Erfindung ist nicht auf die vorher beschriebenen beispielhaften Lösungen beschränkt, Vielmehr sind Kombinationen dieser beschriebenen Varianten möglich und zeichnen sich durch besondere Eigenschaften aus. Um Wiederholungen zu reduzieren wird auf die Darstellung aller Kombinationen insbesondere der für den Fachmann offensichtlichen einzelnen kombinatorischen Effekte verzichtet.

Im Folgenden wird die Erfindung anhand einzelner Beispiele in den Figuren beschrieben. Die Erfindung ist nicht auf diese Beispiele beschränkt.
- Fig. 1: zeigt einen schematischen Aufbau eines beispielhaften erfindungsgemäßen Objektives,
- Fig. 2: zeigt in einem schematischen Querschnitt entlang der Linie B-B das Objektiv gemäß Fig. 1
- Fig. 3: zeigt in einem schematischen Schnitt durch das Filteranordnung entlang der Linie A-A gemäß Fig. 2 des Objektives aus Fig. 1
- Fig. 4: zeigt einen schematischen, beispielhaften optischen Aufbau eines erfindungsgemäßen Objektives
- Fig. 5: zeigt einen anderen schematischen beispielhaften optischen Aufbau eines erfindungsgemäßen Objektives
und
- Fig. 6: zeigt in einer schematischen Darstellung ein erfindungsgemäßes Stereoprojektionssystem.

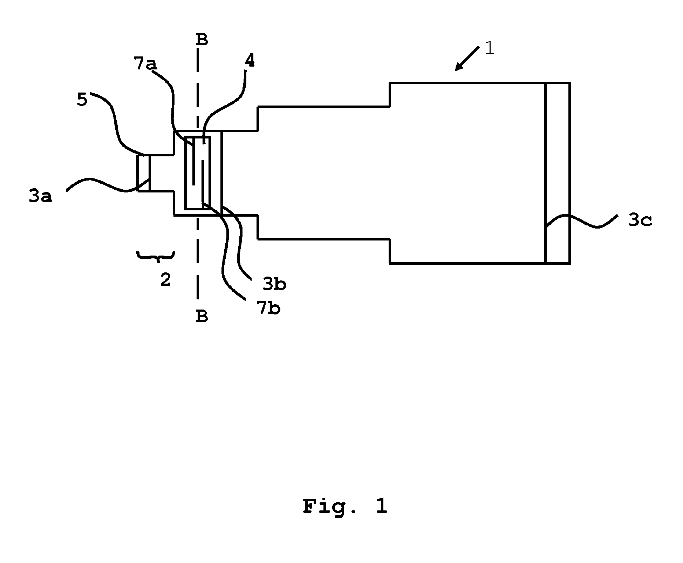

In Fig. 1 ist das Objektiv 1 für einen Projektor zur 3D-Datenselektion dargestellt. Das Objektiv 1 ist eine Filteranordnung 4, in das Gehäuse 5 des Objektives 1 integriert, ausgebildet. Das Objektiv 1 zeigt mehrere Linsenanordnungen 3a, 3b und 3c. Zwischen der ersten Linsenanordnung 3a und der zweiten Linsenanordnung 3b ist die Filteranordnung 4 angeordnet. Sie zeigt zwei Filterräder 7a, 7b, die in Strahlrichtung hintereinander angeordnet sind und so innerhalb des Gehäuses 5 angeordnet sind, dass sie sich im Bereich des Strahlengangs überlappen.

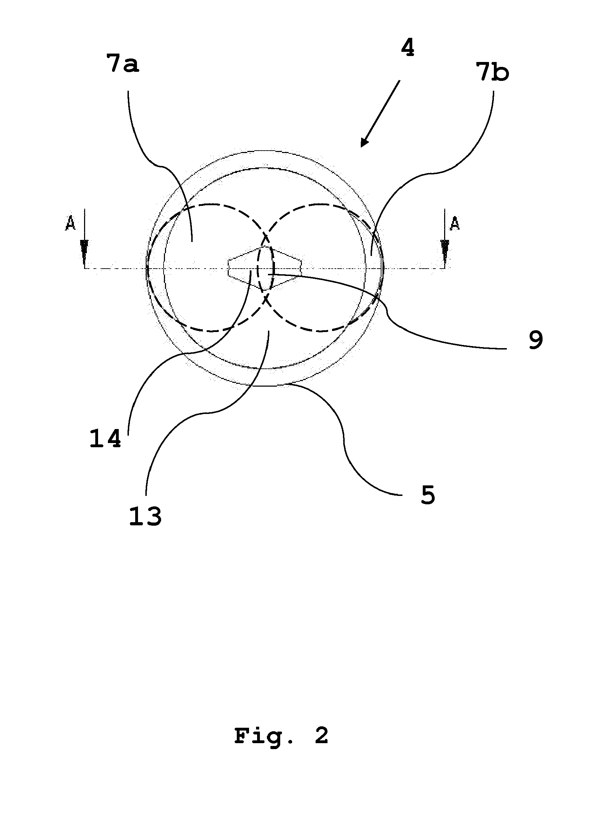

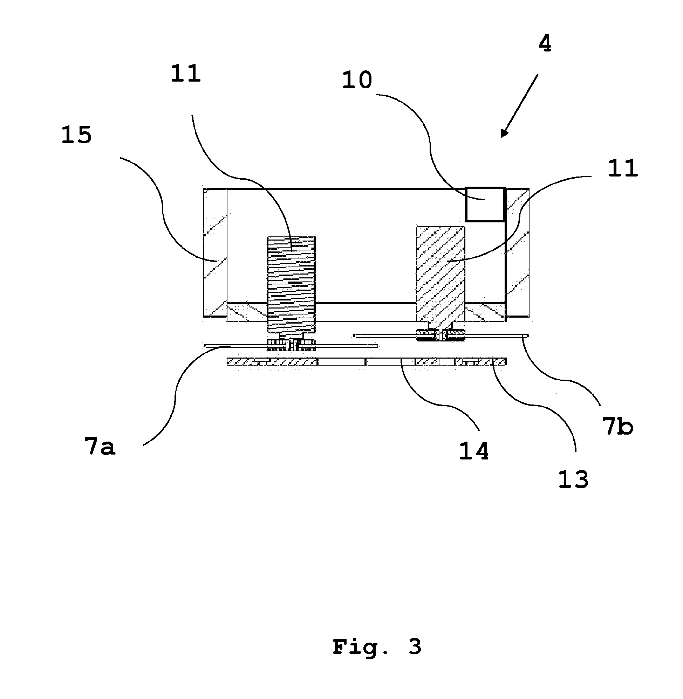

In Fig. 2 ist in einer schematischen Darstellung ein Querschnitt durch das Objektiv 1 aus Fig. 1 entlang der Linie B-B und in Fig. 3 dargestellt in einer schematischen Darstellung ein Schnitt durch das Filteranordnung entlang der Linie A-A aus Fig. 2 des Objektives aus Fig. 1.

In dem Gehäuse 5 des Objektives 1 sind zwei Filterräder 7a, 7b dargestellt. Diese sind bezüglich ihrer Drehachse und ihrer Größe so ausgebildet, dass sie einen begrenzten Überlappbereich 9 zeigen. Der Überlappbereich umfasst dabei jeweils etwa ein Sechstel des Umfangs der Filterräder 7a, 7b. Diese Ausbildung erweist sich als sehr vorteilhaft, da der Überlappbereich 9 eine ausreichende Größe bei relativ kleinen Filterrädern 7a, 7b zeigt, was gerade im Hinblick auf die Positionierung zwischen der ersten Linsengruppe 3a und der zweiten Linsengruppe 3b möglich ist. Dort kann erfindungsgemäß der ganze oder im Wesentlichen der ganze Strahlengang 8 durch den Überlappbereich 9 und damit durch die beiden Filterräder 7a bzw. 7b hindurchtreten. Hierdurch muss sowohl die Filtereigenschaft des ersten Farbrades 7a wie auch die Filtereigenschaft des Farbrades 7b erfüllt sein, damit das Licht des Projektor hindurchtreten kann.

Die beiden Filterräder 7a, 7b sind über zwei elektrischen Stellmotoren 11, welche jeweils auf der Achse der Filterräder 7a, 7b angeordnet sind und dieses in Rotation versetzen angetrieben. Die Stellmotoren 11 sind in einem Gehäuse 15 der modular aufgebauten Filteranordnung 4 positionsgenau und möglichst schwingungsfrei gehalten. Mittels einer ebenso am und im Gehäuse 15 angeordneten elektronischen Synchronisationsstufe 10 ist gewährleistet, dass eine gleichmäßige Rotation der Filterräder und damit eine sichere Bild-Datenselektion mittels der Filteranordnung 4 in dem Objektiv 1 gewährleistet ist.

Sind die Filterräder wie in diesem Beispiel identisch ausgebildet bzw. ausgewählt, so ist auf einfache Weise der synchrone Umlauf, also dieselbe Drehgeschwindigkeit der beiden Filterräder 7a, 7b gewährleistet und eine einmal definierte Phasenlage dauerhaft gewährleistet.

Die Elektromotoren 11 beziehen ihre benötigte elektrische Energie von elektrischen Kontakten 12, die in dem Verbindungsbereich 2 des Objektives 1 zur mechanischen und elektrischen Verbindung mit dem Projektor zur 3D-Datenprojektion angeordnet sind. Die elektrischen Kontakte 12 sorgen dafür, dass von dem Projektor elektrische Energie an das Objektiv 1 zur Energieversorgung gegeben wird, die unter anderem zur Verwendung für den elektrischen Antrieb mittels der Elektromotoren 11 wie auch für die nicht dargestellte Steuereinheit Verwendung findet. Zusätzlich werden über die elektrischen Kontakte 12 noch Steuersignale in das Objektiv 1 eingeführt, die zur Steuerung der Rotationsgeschwindigkeit bzw. zum Starten und Stoppen eines oder beider Elektromotoren 11 verwendet werden.

Weiterhin ist in dem Objektiv eine weitere Einheit zur Zoomverstellung untergebracht, die ebenfalls über einen entsprechenden Elektromotor, der gemeinsam über dieselben elektrischen Kontakte 12 mit elektrischer Energie versorgt wird.

Die beiden Filterräder 7a, 7b sind entsprechend zueinander ausgebildet und mittels der Synchronisationsstufe 10 und der Steuereinheit mit den Elektromotoren 11 so verbunden, dass sie jeweils zu einem definierten Zeitpunkt die passenden Filtersegmente taktgenau in den Strahlengang einbringen bzw. herausbringen. Die Filtersegmente sind dabei aufeinanderfolgend in einem Ring am äußeren Rand der Filterräder 7a, 7b angeordnet. Das eine Filterrad 7a ist als Farbinterferenz-Filterrad mit zwei Farbfiltersegmenten ausgebildet, die zueinander orthogonal ausgebildet sind, d.h. dass ihre Durchlassbereiche keinen oder im wesentlichen keinen Überlapp zueinander zeigen, und zusätzlich jeweils mehrere schmalbandige Durchlassbereiche von unter 50 insbesondere unter 30 nm zeigen. Jedes der Farbfiltersegmente zeigt wenigstens einen Durchlassbereich im roten, grünen und blauen Farbwahrnehmungsbereich des Menschen. Das andere Filterrad 7b zeigt einen entsprechenden Aufbau, wobei hier nicht zwei Farbfiltersegmente verwendet werden, sondern zwei Filtersegmente, die sich in ihren Polarisationseigenschaften unterscheiden und hier ebenso entsprechend orthogonal zueinander ausgebildet sind. Dies ist zum einen ein linkszirkular polarisierter Filter und zum anderen ein Filtersegment mit einem rechtszirkular polarisierten Filter. Diese Filter sind als wire-grid polarizer oder auch Drahtgitterpolarisatoren ausgebildet. Der Polarisationsmechanismus beruht auf einem leitfähigen Drähten, die parallel angeordnet sind und deren Strukturgröße typisch im Subwellenlängenbereich sich bewegen, z.B. Drahtstärke 50 nm und Abstand z.B. 100 nm. Durch ihren Aufbau können sie den hohen Licht- und Temperaturbelastungen erfolgreich widerstehen.

Die jeweiligen Filtersegmente bzw. die Farbfiltersegmente sind zueinander beabstandet ausgebildet und durch einen Blockfilter, der das Licht im sichtbaren Bereich vollständig oder weitgehend blockt, voneinander getrennt. Die Ausbildung der Filtersegmente ausschließlich in dem Randbereich der Filterräder 7a, 7b ermöglicht die Verwendung eines leichten, mechanisch stabilen Trägermaterials für die Filterräder 7a, 7b. Insgesamt können dadurch sehr leichte Filterräder geschaffen werden, die auch durch wenig leistungsstarke Elektromotoren angetrieben werden können. Dies ermöglicht es, die Filteranordnung sehr leicht und kompakt auszubilden, was den Einsatz der erfindungsgemäßen Filteranordnung in einem Objektiv wesentlich vereinfacht.

Die beiden Filterräder 7a, 7b mit den unterschiedlichen Filtereigenschaften, Farbinterferenzfilter auf der einen Seite und Polarisationsfilter auf der anderen Seite, sind so zueinander angeordnet und positioniert, dass jeweils die für den linken Datenkanal passende Filtereigenschaft mit den zugehörigen 3D-Daten für den linken Kanal projiziert werden und in entsprechender Weise zum passenden Zeitpunkt die zugehörigen Filtersegmente für den rechten Datenkanal bzw. die Daten für den rechten Kanal projiziert werden. Dies erfolgt mit Hilfe der Kontakte 12 am Gehäuse 5 im Bereich 2 des Objektives 1 zugeführten Steuerdaten, die durch die nicht dargestellte Steuereinheit erfasst wird und mittels der über die Steuereinheit die Rotationsfrequenz des Antriebsmotors 11 so wählt, dass eine korrekte Taktung gewährleistet ist. Die Synchronizität der Filterräder 7a, 7b bzw. der Filtersegmente wird gemeinsam durch die Anordnung der Filtersegmente auf den Filterrädern, ihre Position zueinander und die Synchronisationsstufe 10 sichergestellt.

Das Objektiv 1 ist im Bereich der Filterräder 7a, 7b in Strahlrichtung vor den Filterrädern 7a, 7b mit eine Blende 13 versehen, die die Kontur des Strahlenbündels begrenzt. Die Blende 13 ist erfindungsgemäß mit einer Öffnung 14 in Form eines Hexagons ausgebildet, welches zweifach achsspiegelsymmetrisch ausgebildet ist. Die beiden Symmetrieachsen sind dabei im Wesentlichen senkrecht zueinander angeordnet. Die eine Symmetrieachse ist durch die Symmetrieachse des Überlappbereichs 9 gebildet und die andere Symmetrieachse ist durch die Drehachsen der Elektromotoren 11 gebildet. Die Seitenlinien des Hexagons sind nicht alle gerade ausgebildet. Vielmehr zeigen die zwei Seiten, welche den Elektromotoren 11 zugewandt und somit diesen am nächsten kommen die Gestalt eines Kreisabschnittes mit dem Kreismittelpunkt der Verlängerung der Drehachse der Elektromotoren 11. Die anderen Seiten sind gerade ausgebildet und jeweils zwei Seiten stehen in einem Winkel von knapp 60° zueinander. Durch diese Anordnung aus Blende 13 mit benachbarten Filterrädern 7a, 7b gelingt es, eine sehr effiziente Durchleuchtung der Filterräder 7a, 7b zu erreichen, was zu einer hohen Lichtausbeute des Objektives 1 mit Bild-Datenselektion führt.

Auf diese Art und Weise ist es gelungen, eine sehr verlässliche 3D-Datenselektion in dem Objektiv zu gewährleisten und dabei das Gewicht der anzutreibenden Filterräder zu verkleinern, ohne dass die optischen Übertragungseigenschaften auf unerwartete Weise negativ beeinträchtigt wird.

Die erfindungsgemäße Anordnung erweist sich als sehr robuste und kompakte Filteranordnung 4, die eine modulare Integration in ein Objektiv 1 ermöglicht. Die Filteranordnung 4 ist dabei als Einheit ausgebildet, die bei Bedarf in ein Objektiv 1 integriert werden kann und somit das Objektiv 1 zu einem Objektiv 1 für die 3D-Datenselektion macht.

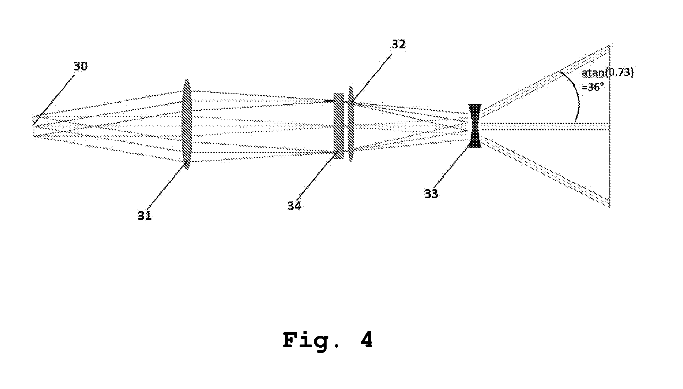

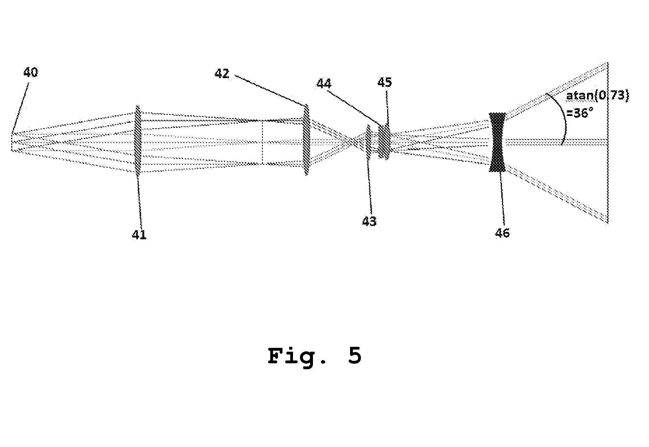

Der optische Aufbau eines Objektives wird im Folgenden anhand zweier Beispiele anhand der Fig. 4 und 5 erläutert.

Der optische Aufbau eines erfindungsgemäßen Objektives zur Projektion der Bildinformation eines DMD-Elements (Digital Micro-Mirror Device) auf einen Projektionsschirm wie beispielsweise auf eine Kinoleinwand muss folgende Grundfunktionen erfüllen. Der DMD-Chip 30 wird durch eine in der Abbildung nicht gezeigten Kondensoroptik mit Weißlicht von hinten beleuchtet. Der DMD-Chip 30 besteht aus einem Raster von elektrisch schaltbaren Mikrospiegelelementen, die das Licht entweder in Richtung der optischen Achse des Objektives transmittieren (wie in der Abbildung gezeigt) oder aus dem Strahlengang heraus reflektieren. Jeder Mikrospiegel stellt ein Element (Pixel) des zu projizierenden Bildes dar. Die Helligkeit des Pixels wird über die Dauer des geschalteten Zustands des Spiegels geregelt. Das Mikrospiegelraster bildet ein zweidimensionales optisches Gitter, dessen Gitterkonstante durch die Größe der Mikrospiegel gegeben ist. Um eine optimale Bildauflösung zu erhalten, ist es nach der von Ernst Abbé aufgestellten Theorie der optischen Abbildung erforderlich, dass neben der nullten Beugungsordnung mindestens die erste Beugungsordnung des Mikrospiegelrasters vom Objektiv übertragen wird. Dadurch ergibt sich der in der Abbildung 3 gezeigte Abstrahlwinkel des DMD-Elements.

Der Durchmesser der ersten Linsengruppe 31 des Objektives 1 wird daher durch den Beugungswinkel und durch die Brennweite der Linsengruppe festgelegt. Nach der ersten Linsengruppe 31 hat man einen Parallelstrahlengang, da sich das DMD in der vorderen Brennebene der Linsengruppe 31 befindet. Dieser Parallelstrahlengang ist für den Einsatz von Interferenzfiltern wichtig, da deren spektrale Transmission stark richtungsabhängig ist. Da die Brennweite der Linsengruppe 31 aus mechanischen Gründen nicht beliebig klein gehalten werden kann, ergeben sich in der Praxis nach der Linsengruppe 31 Durchmesser der Lichtbündel in der Größenordnung von mehreren Zentimetern. In dem gezeigten Beispiel ist der Durchmesser 40 mm. Dies hat zur Folge, dass die Interferenzfilter der Filteranordnung 34 auch eine entsprechende Größe haben müssen.

Im weiteren Verlauf dient die Linsengruppe 33 mit negativer Brennweite dazu, einen großen Projektionswinkel zu erreichen. Im gezeigten Beispiel beträgt er 36°. Diese so realisierte Weitwinkeloptik ist für kurze Projektionsabstände insbesondere für große Projektionsflächen zum Beispiel für Kinoprojektoren besonders geeignet.
Die Linsengruppe 32 sorgt als Feldlinse für die korrekte Pupillenabbildung. Die Linsengruppe 32 befindet sich vorzugsweise in der vorderen Brennebene der Linsengruppe 31. Unmittelbar vor der Linsengruppe 31 befindet sich auch eine Objektivblende. Unmittelbar davor oder dahinter ist wiederum vorzugsweise die Filteranordnung mit den Filterrädern mit den Interferenzfiltern angebracht. Die Linsengruppe 32 lenkt die Hauptstrahlen so um, dass alle Beugungsordnungen durch die Apertur der Linsengruppe 33 passen.

Der Hauptnachteil dieser Ausbildung des Objektives ist, wie bereits erwähnt, der relativ große Durchmesser der Objektivblende und der damit verbundene große erforderliche Durchmesser der Interferenzfilter der Filterräder der Filteranordnung. Eine Verbesserung des erfindungsgemäßen Objektives ist in Fig. 5 dargestellt und zeigt die Möglichkeit der Verkleinerung des Strahlenbündeldurchmessers beziehungsweise des Durchmessers der Aperturblende unter Beibehaltung des erforderlichen Feldwinkels. Dieser ist wichtig für die Größe des projizierten Bildes.

In dem in der Abbildung 4 gezeigten weiteren erfindungsgemäßen Ausführungsbeispiel kommt eine teleskopische Optik bestehend aus Linsengruppe 42 und 43 zum Einsatz, welche in dem Beispiel die Apertur von 40 mm auf 15 mm reduziert. Die Linsengruppe 44 erfüllt in Verbindung mit der Aperturblende die oben beschriebene Feldlinsenfunktion, welche garantiert, dass alle Beugungsordnungen die Linsengruppe 45 passieren. Zwischen Linsengruppe 43 und 45 sind die Strahlen, die von einem Pixel des DMD 40 kommen, parallel, so dass der Interferenzfilter der Filterräder der Filteranordnung 44 von Parallelstrahlenbündeln mit den oben beschriebenen Vorteilen durchsetzt wird. Parallelstrahlenbündel von verschiedenen Pixeln haben zwar unterschiedliche Richtungen, der Winkelbereich ist jedoch vernachlässigbar klein.

Die vordere Brennebene der Linsengruppe 42 fällt mit der hinteren Brennweite der Linsengruppe 41 zusammen. Der Abstand zwischen Linsengruppe 42 und Linsengruppe 43 ist gleich der Summe der Brennweiten von Linsengruppe 42 und Linsengruppe 43.

Dieser optische Aufbau hat mehrere Vorteile, zum einen können die Filtersegmente klein und damit kostengünstig ausgebildet sein, zum anderen können die Filterräder noch kleiner und leichter ausgebildet sein und darüber hinaus lassen sich die Phasen, in denen unterschiedliche Filtersegmente sich zeitgleich im Strahlengang befinden, kurz gehalten werden, so dass unerwünschte, undefinierte Bilddatenselektionen wirkungsvoll beschränkt werden können, ohne dass dies erheblichen Einfluss auf die sonstigen Übertragungseigenschaften des Objektives hat.

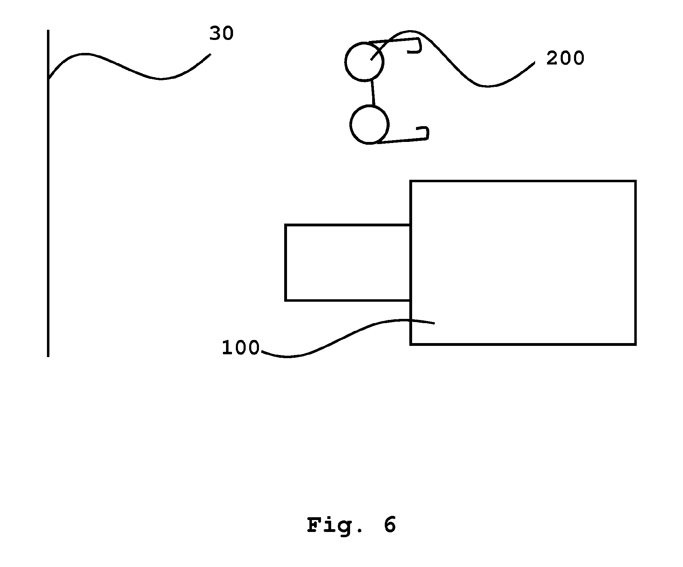

In Fig. 6 ist ein Stereoprojektionssystem dargestellt, das im Folgenden näher beschrieben werden soll. Wird das Objektiv 1 in einen Projektor integriert und über die entsprechenden Kontakte 12 die Energieversorgung für den elektrischen Antrieb 11 und die Steuerdaten über die Kontakte 12 übertragen, so ist es möglich, die Bilddaten kontinuierlich wiederzugeben und dabei jeweils in der richtigen Taktung und damit zum richtigen Zeitpunkt die jeweiligen passenden Filtersegmente für die Selektion der unterschiedlichen Datenkanäle für den linken und rechten Kanal passgenau in den Strahlengang zu bringen, so dass die Bildinformation für den linken Kanal mit den Filtersegmenten für den linken Kanal, d.h. einerseits mit dem passenden Farbinterferenz-Filtersegment und andererseits mit dem entsprechenden Polarisationsfiltersegment gefiltert wird, um anschließend diese selektiv gefilterten projizierten Bilddaten über eine zugehörige Stereobrille und hier über das linke Brillenglas mit den entsprechenden korrespondierenden Filtereigenschaften nur dem linken Auge zur Verfügung zu stellen. Die anderen Informationen, die mit Hilfe anderer Farbkanäle bzw. anderer Polarisationseigenschaften übertragen werden, werden durch den selektiven Filter des linken Brillenglases unterdrückt und gelangen nicht zum linken Auge. Der Filter des linken Brillenglases hat eine Durchlasscharakteristik, die den Filtersegmenten für den linken Datenkanal entspricht.

In entsprechender, aber zum linken Kanal orthogonaler Weise sind die Filtersegmente für den rechten Kanal und der Filter für das rechte Brillenglas ausgebildet und angeordnet. Die Bilddaten für den rechten Bildkanal werden so zum rechten Auge durchgelassen, während die anderen (linken) Bilddaten geblockt werden. Dadurch ist sichergestellt, dass durch das dargestellte Stereosystem eine sehr sichere und selektive 3D-Bilddatenübertragung und Selektion gewährleistet ist. Diese ermöglicht durch die besonders schmalen Durchlassbereiche darüber hinaus eine besonders ausgeprägte Unterdrückung von Störlicht, wodurch auch bei relativ geringen Projektionslichtleistungen ein sehr brillantes, kontrastreiches und angenehmes Bildempfinden gewährleistet ist.

### Bezugszeichenliste:

- 1.: Objektiv
- 2.: Verbindungsbereich
- 3.: Linsengruppen (3a, 3b, 3c)
- 4.: Filteranordnung
- 5.: Gehäuse
- 7.: Filterräder (7a, 7b)
- 8.: Strahlengang
- 9.: Überlappbereich
- 10.: Synchronisationsstufe
- 11.: Antriebsmotor
- 12.: Elektrische Kontakte
- 13.: Blende
- 14.: Blendenöffnung
- 15.: Filteranordnungsgehäuse

- 30.: DMD-Chip
- 31.: Erste Linsengruppe mit Aperturblende
- 32.: Zweite Linsengruppe
- 33.: Dritte Linsengruppe
- 34.: Filteranordnung

- 40.: DMD-Chip
- 41.: Erste Linsengruppe
- 42.: Zweite Linsengruppe
- 43.: Dritte Linsengruppe
- 44.: Filteranordnung
- 45.: Vierte Linsengruppe mit Aperturblende
- 46.: Fünfte Linsengruppe

- 100.: Projektor
- 200.: Stereobrille
- 300.: Projektionsschirm

## Patentansprüche

1. Objektiv für einen Projektor oder eine Kamera mit einer Filteranordnung zur Bild-Datenselektion, welche im Objektiv integriert ausgebildet ist,
**dadurch gekennzeichnet, dass** die Filteranordnung zwei oder mehr Filterräder aufweist, die in den Strahlengang des Objektives hineinkragen, wobei sie sich überlappend.

2. Objektiv nach Anspruch 1,
**dadurch gekennzeichnet, dass** jedem Filterrad ein Motor insbesondere ein Elektromotor, insbesondere ein Schrittmotor zum Antrieb des Filterrades zugeordnet ist.

3. Objektiv nach Anspruch 1,
**dadurch gekennzeichnet, dass** mehreren Filterrädern gemeinsam ein einziger Motor zum Antrieb der zugeordneten Filterräder zugeordnet ist und dass zwischen dem oder den Filterrädern und dem zugeordneten Motor ein Getriebe angeordnet ist.

4. Objektiv nach einem der vorstehenden Ansprüche,
**dadurch gekennzeichnet, dass** eine Synchronisationsstufe zur Synchronisierung der Filterräder vorgesehen ist, das insbesondere als gemeinsames Getriebe zwischen Filterrädern und einem oder mehreren Motoren ausgebildet ist.

5. Objektiv nach einem der vorstehenden Ansprüche,
**dadurch gekennzeichnet, dass** eine elektronische Steuereinheit vorgesehen ist, die Filterräder hinsichtlich der Rotationsfrequenz, der Phasenlage und der Synchronisation in Verbindung mit dem oder den Motoren steuert.

6. Objektiv nach einem der vorstehenden Ansprüche,
**dadurch gekennzeichnet, dass** das Objektiv an seiner Außenseite insbesondere im Bereich zur mechanischen Verbindung mit einem Projektor oder einer Kamera mehrere elektrische Kontakte zur Energieversorgung und/oder zur Zuführung von Steuerdaten insbesondere für die Steuereinheit aufweist.

7. Objektiv nach einem der vorstehenden Ansprüche,
**dadurch gekennzeichnet, dass** wenigstens ein weiterer Motor zum Antrieb einer Zoom-, Blenden- und/oder Scharfstellungseinheit vorgesehen ist, der mit den Kontakten elektrisch verbunden ist.

8. Objektiv nach einem der vorstehenden Ansprüche,
**dadurch gekennzeichnet, dass** wenigstens ein Filterrad mehrere Farbfiltersegmente aufweist, die als Farbfilter insbesondere als Farbinterferenzfilter mit einem oder mehreren schmalbandigen Durchlassbereichen mit einer Halbwertbreite von unter 50 nm insbesondere unter 30 nm ausgebildet sind.

9. Objektiv nach einem der vorstehenden Ansprüche,
**dadurch gekennzeichnet, dass** es wenigstens ein Filterrad Filtersegmente mit unterschiedlichen Polarisationsfiltern aufweist.

10. Objektiv nach einem der vorstehenden Ansprüche 8 oder 9, **dadurch gekennzeichnet, dass** es wenigstens ein Filterrad mit mehreren Filtersegmenten aufweist, die als Farbfilter insbesondere Farbinterferenzfilter mit einem oder mehreren schmalbandigen Durchlassbereichen mit einer Halbwertsbreite von unter 50 nm insbesondere unter 30 nm ausgebildet sind, und dass es wenigstens ein Filterrad mit Filtersegmenten aufweist, das mehrere unterschiedliche Polarisationsfilter aufweist.

11. Objektiv nach einem der vorstehenden Ansprüche 8, 9 oder 10,
**dadurch gekennzeichnet, dass** zwischen den Filtersegmenten zur schmalbandigen Farbfilterung und/oder zur Polarisationsfilterung eines Filterrades ein Filtersegment zur Blockfilterung angeordnet ist.

12. Objektiv nach einem der vorstehenden Ansprüche,
**dadurch gekennzeichnet, dass** zwei Filterräder sich im Aufbau und in ihren Filtereigenschaften entsprechen.

13. Objektiv nach einem der vorstehenden Ansprüche,
**dadurch gekennzeichnet, dass** die Filterräder im Strahlengang so ausgebildet und angeordnet sind, dass etwa 1/6 des Umfangs der Filterräder im Überlappbereich enthalten sind.

14. Objektiv nach einem der vorstehenden Ansprüche,
**dadurch gekennzeichnet, dass** eine Blende im Bereich der Filterräder vorgesehen ist, die eine Öffnung im Wesentlichen in der Form eines 2-fach achsspiegelsymmetrischen Hexagons zeigt.

15. Objektiv nach einem der vorstehenden Ansprüche,
**dadurch gekennzeichnet, dass** die Filtersegmente eines Filterrades im äußeren Randbereich ringförmig mit einer Breite kleiner als der halbe Radius des Filterrades ausgebildet und angeordnet sind.

16. Objektiv nach einem der vorstehenden Ansprüche,
**dadurch gekennzeichnet, dass** zusätzlich zu den Filtersegmenten eines Filterrades zur schmalbandigen Farbfilterung und/oder zur Polarisationsfilterung wenigstens ein weiteres Filtersegment mit einem den sichtbaren Lichtbereich umfassenden Durchlassbereich vorgesehen ist.

17. Objektiv nach einem der vorstehenden Ansprüche,
**dadurch gekennzeichnet, dass** Filterräder mit den Filtersegmente paarweise in Gegenrichtung rotierend ausgebildet sind.

18. Objektiv nach einem der vorstehenden Ansprüche,
**dadurch gekennzeichnet, dass** Filterräder zwischen der ersten und zweiten Linsengruppe im Bereich der mechanischen Verbindung zu einem Projektor oder einer Kamera angeordnet sind.

19. Objektiv nach einem der vorstehenden Ansprüche 1 bis 17, **dadurch gekennzeichnet, dass** das Objektiv eine teleskopische Optikeinheit aufweist und die Filterräder zwischen der ersten Linsengruppe und der teleskopischen Optikeinheit angeordnet sind.

20. Stereoprojektionssystem zur Erzeugung einer optisch dreidimensional wahrnehmbaren Bildwiedergabe auf einer Projektionsfläche mit einem Projektor mit einem Projektionsobjektiv nach einem der vorstehenden Ansprüche und wenigstens einer Stereobrille, deren Brillengläser in ihren transmittierenden Eigenschaften für das linke und das rechte Auge eines Betrachters denen der Filter zur 3D-Datenselektion im Projektionsobjektiv entsprechen.
